# EUROPÄISCHE PATENTANMELDUNG

(11) **EP 4 044 385 A1**
(43) Veröffentlichungstag der Anmeldung: **17.08.2022**
(21) Anmeldenummer: 21203599.2
(22) Anmeldetag: 20.10.2021
(51) Int. Cl.: H02G 3/14, H01R 13/44

(54) **ELEKTRISCHES/ELEKTRONISCHES INSTALLATIONSGERÄT**

(30) Priorität: 15.02.2021 DE 102021103433
(71) Anmelder: Albrecht Jung GmbH & Co. KG, 58579 Schalksmühle (DE)
(72) Erfinder: Koch, Eckhard, 58091 Hagen (DE); Biniossek, Nik, 58099 Hagen (DE); Era, Eduard, 58513 Lüdenscheid (DE); Ritter, Carla, 58553 Halver (DE); Christian, Kurzbach, 58339 Breckerfeld (DE); Stefan, Maslow, 58339 Breckerfeld (DE); Prinz, Falko, 58509 Lüdenscheid (DE); Schmitz, Heinz-Theo, 58802 Balve (DE); Stuke, Oliver, 32756 Detmold (DE); Haugk, Christian, 58579 Schalksmühle (DE)

(57) **Zusammenfassung**

Es wird ein elektrisches/elektronisches Installationsgerät mit einem schwenkbar am Gehäuse gelagerten Klappdeckel vorgeschlagen, welcher ausgehend von seiner die Funktionsmöglichkeiten des elektrischen/elektronischen Installationsgerätes abdeckenden ersten Position vom Benutzer in eine die Funktionsmöglichkeiten des elektrischen/elektronischen Installationsgerätes freigebenden zweiten Position bringbar ist. Zu dem Zweck, ein elektrisches/elektronisches Installationsgerät zu schaffen, bei welchem das Verbringen des Klappdeckels, ausgehend von seiner ersten Position in seine zweite Position so lange verhindert ist, bis der Benutzer zum Lösen einer durch eine Riegelanordnung herbeigeführten Verriegelung eine ordnungsgemäße Betätigung an den Riegeln dieser Riegelanordnung durchgeführt hat, ist an der dem elektrischen/elektronischen Installationsgerät zugewandten Unterseite des Klappdeckels eine aus zumindest einem ersten Riegel und zumindest einem zweiten Riegel bestehende Riegelanordnung verschieblich gelagert, welche, wenn sich der Klappdeckel in seiner ersten Position befindet, mit zumindest einem ersten Riegel und/oder zumindest einem zweiten Riegel verriegelnd mit zumindest einem am Gehäuse des elektrischen/elektronischen Installationsgerätes vorhandenen Riegelzapfen zusammenwirkt.

## Beschreibung

Die vorliegende Erfindung geht von einem gemäß Oberbegriff des Hauptanspruches konzipierten elektrischen/elektronischen Installationsgerät aus.

Klappdeckel derartiger elektrischer/elektronischer Installationsgeräte stellen in der Regel einen Schutzmechanismus für diese dar, welche oftmals auch aus sicherheitstechnischen Gründen Verwendung findet. Im Zusammenhang mit einer Vielzahl von in Gebäuden installierten elektrischen/elektronischen Installationsgeräten, wie zum Beispiel Schutzkontaktsteckdosen, Displaygeräte, Schalter, Taster und so weiter, finden deshalb Klappdeckel an diesen Verwendung. In diesem Zusammenhang sind vielfältige Ausführungen solcher Klappdeckel mit unterschiedlichen Designs vorbekannt. Zum weitaus überwiegenden Teil finden solche Klappdeckel bei als Schutzkontaktsteckdosen ausgebildeten elektrischen/elektronischen Installationsgeräten Anwendung, um diese vor dem Eindringen von Schmutz, Staub, Feuchtigkeit (Spritzwasserschutz) und so weiter zu schützen.

Durch die DE 10 2014 107 831 A1 und die DE 44 30 519 A1 sind jeweils dem Oberbegriff des Hauptanspruches entsprechende elektrische/elektronische Installationsgeräte mit einem Klappdeckel bekannt geworden. Die Klappdeckel dieser elektrischen/elektronischen Installationsgeräte sind jeweils an dessen Gehäuse schwenkbar gelagert und in zwei Positionen bringbar, wobei der Klappdeckel in seiner ersten Position die Funktionsmöglichkeiten des elektrischen/elektronischen Installationsgerätes abdeckt und in seiner zweiten Position freigibt.

Die Klappdeckel dieser elektrischen/elektronischen Installationsgeräte weisen jeweils eine Lageranordnung auf, welche mit einem unter Vorspannung stehenden Federelement ausgerüstet ist. Die Klappdeckel sind jeweils schwenkbar am Gehäuse beziehungsweise Zentralstück des elektrischen/elektronischen Installationsgerätes gelagert und werden mit einer entgegen der Öffnungsbewegung wirkenden Federkraft beaufschlagt.

Klappdeckel derartiger elektrischer/elektronischer Installationsgeräte lassen sich vom Benutzer ohne Weiteres, ausgehend von ihrer ersten Position, in welcher die Funktionsmöglichkeiten des elektrischen/elektronischen Installationsgerätes abgedeckt sind, in ihre zweite Position bringen, in welcher die Funktionsmöglichkeiten des elektrischen/elektronischen Installationsgerätes freigegeben sind. Nicht immer möchte man, zum Beispiel aus sicherheitstechnischen Gründen, auf eine derart einfache Art und Weise dem Benutzer die Möglichkeit bieten, den Klappdeckel von seiner ersten Position in seine zweite Position zu bringen.

Ausgehend von derartigen mit einem Klappdeckel ausgerüsteten elektrischen/elektronischen Installationsgeräten liegt der vorliegenden Erfindung deshalb die Aufgabe zugrunde, auf kostengünstige Art und Weise ein elektrisches/elektronisches Installationsgerät mit Klappdeckel zu schaffen, bei welchem das Verbringen des Klappdeckels, ausgehend von seiner ersten Position in seine zweite Position so lange verhindert ist, bis der Benutzer zum Lösen einer durch eine Riegelanordnung herbeigeführten Verriegelung eine ordnungsgemäße Betätigung an den Riegeln dieser Riegelanordnung durchgeführt hat.

Erfindungsgemäß wird diese Aufgabe durch die im Hauptanspruch angegebenen Merkmale gelöst.

Bei einer solchen Ausbildung ist besonders vorteilhaft, dass die Riegelanordnung den Klappdeckel in seiner ersten Position sicher am Gehäuse beziehungsweise Zentralstück des elektrischen/elektronischen Installationsgerätes verriegelt und die Verriegelung nur dann freigibt, wenn der Benutzer, ohne einen Schlüssel benutzen zu müssen, zwei in verschiedene Richtungen auszuführende Betätigungshandlungen an den Riegeln der Riegelanordnung durchgeführt hat.

Weitere vorteilhafte Ausgestaltungen des erfindungsgemäßen Gegenstandes sind in den Unteransprüchen angegeben. Anhand von zwei Ausführungsbeispielen sei die Erfindung im Prinzip näher erläutert, dabei zeigt:
- Fig. 1:: prinziphaft ein elektrisches/elektronisches Installationsgerät mit geschlossenem Klappdeckel (erste Position), räumlich, in der Draufsicht;
- Fig. 2:: prinziphaft ein elektrisches/elektronisches Installationsgerät mit geöffnetem Klappdeckel (zweite Position), räumlich, in der Draufsicht;
- Fig. 3:: prinziphaft ein mit Klappdeckel versehenes elektrisches/elektronisches Installationsgerät gemäß erstem Ausführungsbeispiel, räumlich, in Explosionsdarstellung;
- Fig. 4:: prinziphaft das Zentralstück mit dem daran schwenkbar gelagerten Klappdeckel in geöffneter zweiter Position, räumlich, in Draufsicht gemäß erstem Ausführungsbeispiel;
- Fig. 5:: prinziphaft ein mit Klappdeckel versehenes elektrisches/elektronisches Installationsgerät gemäß zweitem Ausführungsbeispiel, räumlich, in Explosionsdarstellung;
- Fig. 6:: prinziphaft das Zentralstück mit dem daran schwenkbar gelagerten Klappdeckel in geöffneter zweiter Position, räumlich, in Draufsicht gemäß zweitem Ausführungsbeispiel.

Wie aus den Figuren hervorgeht, ist das elektrische/elektronische Installationsgerät gemäß den beiden Ausführungsbeispielen als Schutzkontaktsteckdose ausgeführt und weist einen, schwenkbar an seinem Gehäuse (Zentralstück 1) gelagerten Klappdeckel 2 auf, welcher, ausgehend von seiner die Funktionsmöglichkeiten des elektrischen/elektronischen Installationsgerätes abdeckenden ersten Position, vom Benutzer in eine die Funktionsmöglichkeiten des elektrischen/elektronischen Installationsgerätes freigebenden zweiten Position bringbar ist. An der dem elektrischen/elektronischen Installationsgerät zugewandten Unterseite des Klappdeckels 2 ist eine aus zwei ersten Riegeln R1 und einem zweiten Riegel R2 bestehende Riegelanordnung verschieblich gelagert, welche, wenn sich der Klappdeckel 2 in seiner ersten Position befindet, mittels des zweiten Riegels R2 verriegelnd mit zwei am Zentralstück 1 vorhandenen Riegelzapfen 3 zusammenwirkt. Zu diesem Zweck sind an den zweiten Riegel R2 zwei Riegelhaken 5 angeformt, die mit den Riegelzapfen 3 zusammenwirken. Die Riegelanordnung weist also insgesamt drei Riegel R1, R2 auf. Da das elektrische/elektronische Installationsgerät als Schutzkontaktsteckdose ausgeführt ist, ist das Gehäuse, wie bereits erwähnt, als Zentralstück 1 anzusprechen. Das Zentralstück 1 weist aus diesem Grunde einen Steckdosentopf 4 auf, in welchen der - der Einfachheit halber nicht dargestellte - Schutzkontaktstecker eingeführt wird. Bei den beiden vorliegenden Ausführungsbeispielen ist das als Schutzkontaktsteckdose ausgeführte Installationsgerät von einem Designrahmen D umgeben. Das Zentralstück 1 wird unter Zwischenschaltung des Designrahmens D mittels einer Schraube am Steckdoseneinsatz E der Schutzkontaktsteckdose sicher befestigt. Der Steckdoseneinsatz E wiederum ist zu seiner Befestigung mit einem Tragring T und zwei Befestigungskrallen K ausgerüstet.

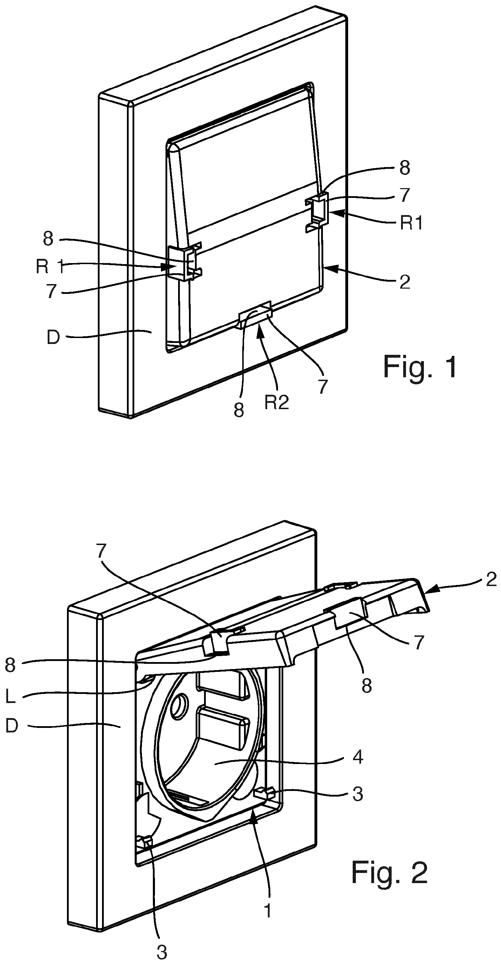

Wie insbesondere aus den Figuren 2 bis 6 hervorgeht, ist der Klappdeckel 2 mit seiner ersten Längsseite über eine eine Schwenkachse aufweisende Lageranordnung L verschwenkbar am Zentralstück 1 gelagert. Die beiden ersten Riegel R1 sind parallel zur Schwenkachse der Lageranordnung L verschieblich an der Unterseite des Klappdeckels 2 gelagert, wohingegen der zweite Riegel R2 senkrecht zur Schwenkachse der Lageranordnung L verschieblich an der Unterseite des Klappdeckels 2 gelagert ist. Jeder der drei Riegel R1, R2 weist je ein angeformtes Betätigungsgriffstück 7 auf, welches je einer im Klappdeckel 2 vorhandenen Führungsausnehmung 8 zugeordnet ist.

Zum Lösen der Verriegelung (erste Position des Klappdeckels 2), um das Verschwenken des Klappdeckels 2 in seine zweite Position zu ermöglichen, müssen vom Benutzer zwei, in verschiedene Richtungen auszuführende Betätigungshandlungen vorgenommen werden, welche auf die beiden ersten Riegel R1 und den einen zweiten Riegel R2 der Riegelanordnung zur Einwirkung gebracht werden müssen. Ein Schlüssel kommt bei diesen Betätigungshandlungen nicht zur Verwendung, wie des Weiteren auch aus den Figuren hervorgeht.

Ausgehend von seiner ersten Position wird der Klappdeckel 2 durch Verschwenken in seine zweite Position verbracht, dabei wird der Klappdeckel 2 mit einer, entgegen dieser Öffnungsbewegung wirkenden Federkraft beaufschlagt beziehungsweise durch die Öffnungsbewegung wird eine mit dem Klappdeckel 2 in Wirkverbindung stehende - der Einfachheit halber nicht dargestellte - Feder gespannt.

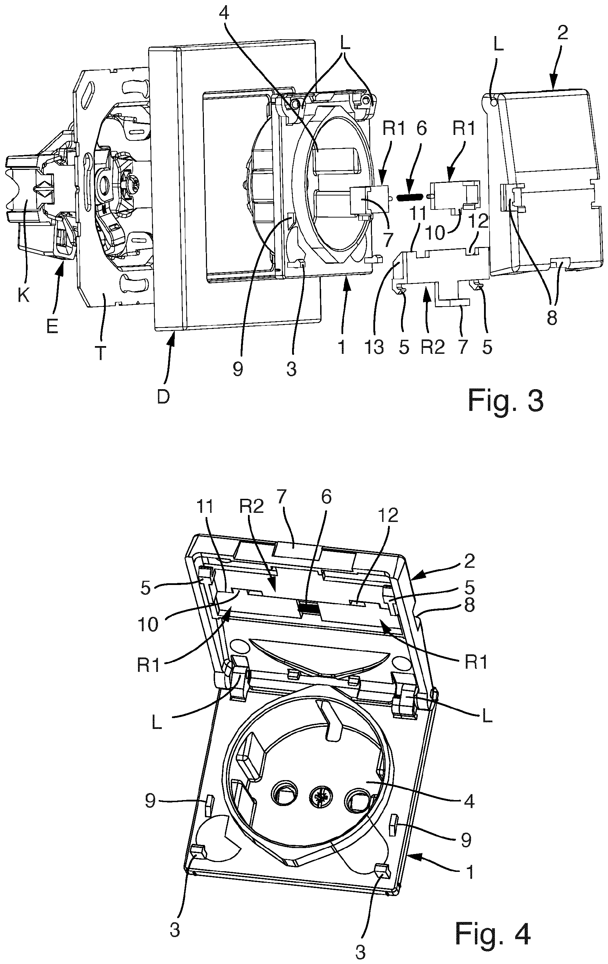

Wie insbesondere aus den Figuren 3 und 4 (erstes Ausführungsbeispiel) hervorgeht, können die beiden ersten Riegel R1, ausgehend von ihrer Sperrposition durch die Betätigung des Benutzers entgegen der Kraft eines als Schraubendruckfeder ausgeführten Federelementes 6 aufeinander zu bewegt werden. So lange sich die beiden ersten Riegel R1 in ihrer Sperrposition befinden und nicht ihre Freigabeposition durch die Betätigung des Benutzers erreicht haben, ist die Verschieblichkeit des zweiten Riegels R2 blockiert beziehungsweise gesperrt. Zu diesem Zweck ist an die beiden ersten Riegel R1 je ein Ansatz 10 angeformt, welcher entweder mit einer zugeordneten, am zweiten Riegel R2 vorhandenen Wirkfläche (Sperrposition) oder aber mit einer zugeordneten, im zweiten Riegel R2 vorhandenen Nut (Freigabeposition) zusammenwirkt.

Erst wenn sich die beiden ersten Riegel R1 in ihrer Freigabeposition befinden, in welcher die beiden Riegel R1 maximal aufeinander zu bewegt wurden und das Federelement 6 (Schraubendruckfeder) maximal gespannt ist, ergibt sich für den Benutzer die Möglichkeit, den zweiten Riegel R2 senkrecht zur Schwenkachse der Lageranordnung L zu verschieben, um die Verriegelung aufzuheben. Dabei tauchen die Ansätze 10 der beiden ersten Riegel R1, ausgehend von ihrer Anlage an die Wirkflächen 11 in die zugeordnete Nut 12 des zweiten Riegels R2 ein. Die Verriegelung aufzuheben bedeutet zudem, dass die beiden Riegelhaken 5 des zweiten Riegels R2 aus der Wirkverbindung mit den beiden Riegelzapfen 3 des Zentralstücks 1 herausbewegt wurden und somit der Klappdeckel 2, ausgehend von seiner die Funktionsmöglichkeiten der Schutzkontaktsteckdose abdeckenden ersten Position, in die die Funktionsmöglichkeiten der Schutzkontaktsteckdose freigebende zweite Position verschwenkt werden kann. Bei diesem Bewegungsablauf der beiden ersten Riegel R1 und des einen zweiten Riegels R2 der Riegelanordnung wirkt der zweite Riegel R2 zudem mit zwei am Zentralstück 1 befindlichen Führungselementen 9 zusammen, welche als Wirkfläche je eine schiefe Ebene aufweisen. Die Gegenwirkflächen 13 des zweiten Riegels R2 sind ebenfalls als schiefe Ebene ausgeführt.

Die Ansätze 10 der beiden ersten Riegel R1 und die beiden zugehörigen Nuten 12 des zweiten Riegels R2 sorgen durch ihre Anordnung und Ausführung dafür, dass, wenn sich der Klappdeckel 2 in seiner die Funktionsmöglichkeiten der Schutzkontaktsteckdose freigebenden zweiten Position befindet, die Riegel R1 und R2 der Riegelanordnung stabil in ihrer Freigabeposition verbleiben. Erst wenn der Klappdeckel 2 ausgehend von seiner die Funktionsmöglichkeiten freigebenden zweiten Position wieder in seine die Funktionsmöglichkeiten der Schutzkontaktsteckdose abdeckenden ersten Position zurückgeschwenkt wird, bewegen sich sowohl die beiden ersten Riegel R1 als auch der eine zweite Riegel R2 in ihre Sperrposition zurück. Dies geschieht durch die frei werdende Federkraft des als Schraubendruckfeder ausgebildeten Federelements 6 und das Zusammenwirken der Gegenwirkflächen 13 des zweiten Riegels R2 mit den Wirkflächen 11 des Führungselementes 9 sowie das Zusammenwirken der Ansätze 10 der beiden ersten Riegel R1 mit den Wirkflächen 11 des zweiten Riegels R2. Schlussendlich kommen auch die Riegelhaken 5 des zweiten Riegels R2 wieder mit den Riegelzapfen 3 des Zentralstücks 1 rastend in Wirkverbindung.

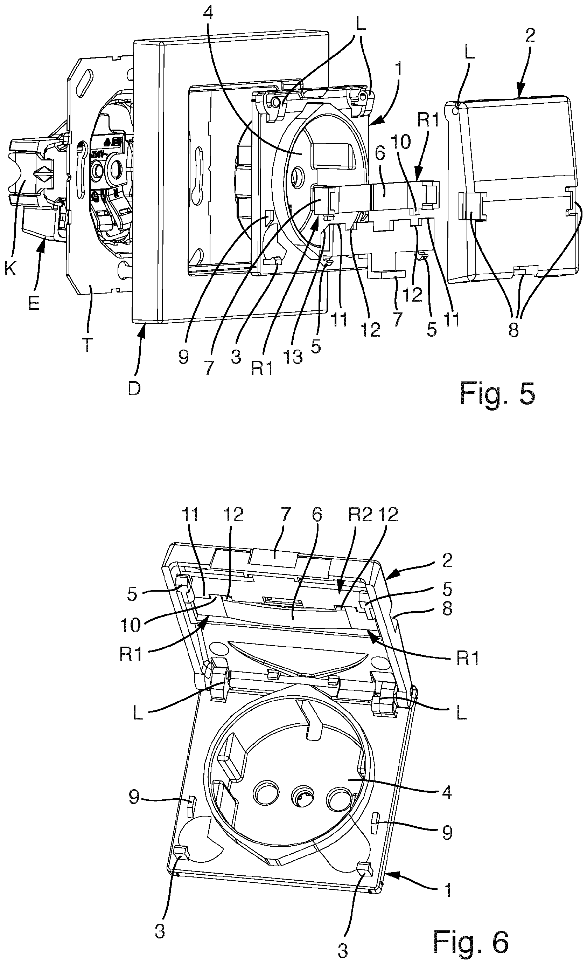

Wie insbesondere aus den Figuren 5 und 6 (zweites Ausführungsbeispiel) hervorgeht, können die beiden ersten Riegel R1, ausgehend von ihrer Sperrposition durch die Betätigung des Benutzers entgegen der Kraft eines als Blattfeder ausgeführten Federelementes 6 aufeinander zu bewegt werden. Das als Blattfeder ausgeführte Federelement 6 stellt im vorliegenden Fall eine einstückige Verbindung zwischen den beiden ersten Riegeln R1 dar. So lange sich die beiden ersten Riegel R1 in ihrer Sperrposition befinden und nicht ihre Freigabeposition durch die Betätigung des Benutzers erreicht haben, ist die Verschieblichkeit des zweiten Riegels R2 blockiert beziehungsweise gesperrt. Zu diesem Zweck ist an die beiden ersten Riegel R1 je ein Ansatz 10 angeformt, welcher entweder mit einer zugeordneten, am zweiten Riegel R2 vorhandenen Wirkfläche (Sperrposition) oder aber mit einer zugeordneten, im zweiten Riegel R2 vorhandenen Nut (Freigabeposition) zusammenwirkt.

Erst wenn sich die beiden ersten Riegel R1 in ihrer Freigabeposition befinden, in welcher die beiden Riegel R1 maximal aufeinander zu bewegt wurden und das Federelement 6 (Blattfeder) maximal gespannt ist, ergibt sich für den Benutzer die Möglichkeit, den zweiten Riegel R2 senkrecht zur Schwenkachse der Lageranordnung L zu verschieben, um die Verriegelung aufzuheben. Dabei tauchen die Ansätze 10 der beiden ersten Riegel R1, ausgehend von ihrer Anlage an die Wirkflächen 11 in die zugeordnete Nut 12 des zweiten Riegels R2 ein. Die Verriegelung aufzuheben bedeutet zudem, dass die beiden Riegelhaken 5 des zweiten Riegels R2 aus der Wirkverbindung mit den beiden Riegelzapfen 3 des Zentralstücks 1 herausbewegt wurden und somit der Klappdeckel 2, ausgehend von seiner die Funktionsmöglichkeiten der Schutzkontaktsteckdose abdeckenden ersten Position, in die die Funktionsmöglichkeiten der Schutzkontaktsteckdose freigebende zweite Position verschwenkt werden kann. Bei diesem Bewegungsablauf der beiden ersten Riegel R1 und des einen zweiten Riegels R2 der Riegelanordnung wirkt der zweite Riegel R2 zudem mit zwei am Zentralstück 1 befindlichen Führungselementen 9 zusammen, welche als Wirkfläche je eine schiefe Ebene aufweisen. Die Gegenwirkflächen 13 des zweiten Riegels R2 sind ebenfalls als schiefe Ebenen ausgeführt.

Die Ansätze 10 der beiden ersten Riegel R1 und die beiden zugehörigen Nuten 12 des zweiten Riegels R2 sorgen durch ihre Anordnung und Ausführung dafür, dass, wenn sich der Klappdeckel 2 in seiner die Funktionsmöglichkeiten der Schutzkontaktsteckdose freigebenden zweiten Position befindet, die Riegel R1 und R2 der Riegelanordnung stabil in ihrer Freigabeposition verbleiben. Erst wenn der Riegel ausgehend von seiner Freigabeposition wieder in seine die Funktionsmöglichkeiten der Schutzkontaktsteckdose abdeckenden ersten Position zurückgeschwenkt wird, bewegen sich sowohl die beiden ersten Riegel R1 als auch der eine zweite Riegel R2 in ihre Sperrposition zurück. Dies geschieht durch die frei werdende Federkraft des als Blattfeder ausgebildeten Federelements 6 und das Zusammenwirken der Gegenwirkflächen 13 des zweiten Riegels R2 mit den Wirkflächen 11 des Führungselementes 9 sowie das Zusammenwirken der Ansätze 10 der beiden ersten Riegel R1 mit den Wirkflächen 11 des zweiten Riegels R2. Schlussendlich kommen auch die Riegelhaken 5 des zweiten Riegels R2 wieder mit den Riegelzapfen 3 des Zentralstücks 1 rastend in Wirkverbindung.

Es ist somit ein mit einem Klappdeckel 2 ausgerüstetes elektrisches/elektronisches Installationsgerät geschaffen, bei welchem auf kostengünstige Art und Weise das Verbringen des Klappdeckels 2, ausgehend von seiner ersten Position in seine zweite Position so lange verhindert ist, bis der Benutzer zum Lösen einer durch eine Riegelanordnung herbeigeführten Verriegelung eine ordnungsgemäße Betätigung an den Riegeln R1, R2 dieser Riegelanordnung durchgeführt hat.

Vorteilhafterweise verriegelt die Riegelanordnung den Klappdeckel 2 in seiner ersten Position sicher am Gehäuse beziehungsweise Zentralstück 1 des elektrischen/elektronischen Installationsgerätes und gibt die Verriegelung nur dann frei, wenn der Benutzer, ohne einen Schlüssel benutzen zu müssen, zwei in verschiedene Richtungen auszuführende Betätigungshandlungen an den Riegeln R1, R2 der Riegelanordnung durchgeführt hat.

### Bezugszeichenliste

- 1: Zentralstück
- 2: Klappdeckel
- 3: Riegelzapfen
- 4: Steckdosentopf
- 5: Riegelhaken
- 6: Federelement
- 7: Betätigungsgriffstück
- 8: Führungsausnehmung
- 9: Führungselement
- 10: Ansätze
- 11: Wirkflächen
- 12: Nuten
- 13: Gegenwirkflächen
- D: Designrahmen
- E: Steckdoseneinsatz
- K: Befestigungskrallen
- L: Lageranordnung
- R1: Erster Riegel
- R2: Zweiter Riegel
- T: Tragring

## Patentansprüche

1. Elektrisches/elektronisches Installationsgerät mit einem schwenkbar am Gehäuse gelagerten Klappdeckel (2), welcher ausgehend von seiner die Funktionsmöglichkeiten des elektrischen/elektronischen Installationsgerätes abdeckenden ersten Position vom Benutzer in eine die Funktionsmöglichkeiten des elektrischen/elektronischen Installationsgerätes freigebenden zweiten Position bringbar ist, **dadurch gekennzeichnet, dass** an der dem elektrischen/elektronischen Installationsgerät zugewandten Unterseite des Klappdeckels (2) eine aus zumindest einem ersten Riegel (R1) und zumindest einem zweiten Riegel (R2) bestehende Riegelanordnung verschieblich gelagert ist, welche, wenn sich der Klappdeckel (2) in seiner ersten Position befindet, mit zumindest einem ersten Riegel (R1) und/oder zumindest einem zweiten Riegel (R2) verriegelnd mit zumindest einem am Gehäuse des elektrischen/elektronischen Installationsgerätes vorhandenen Riegelzapfen (3) zusammenwirkt.

2. Elektrisches/elektronisches Installationsgerät nach Anspruch 1, **dadurch gekennzeichnet, dass** der zumindest eine erste Riegel (R1) und der zumindest eine zweite Riegel (R2) der Riegelanordnung in verschiedene Richtungen verschieblich an der Unterseite des Klappdeckels (2) gelagert sind.

3. Elektrisches/elektronisches Installationsgerät nach Anspruch 1 oder Anspruch 2, **dadurch gekennzeichnet, dass** der zumindest eine erste Riegel (R1) und/oder der zumindest eine zweite Riegel (R2) der Riegelanordnung mit zumindest einem Federelement (6) zusammenwirkt.

4. Elektrisches/elektronisches Installationsgerät nach einem der Ansprüche 1 bis 3, **dadurch gekennzeichnet, dass** der zumindest eine erste Riegel (R1) und/oder der zumindest eine zweite Riegel (R2) der Riegelanordnung mit einem am Gehäuse vorhandenen, eine schiefe Ebene aufweisenden Führungselement (9) zusammenwirkt.

5. Elektrisches/elektronisches Installationsgerät nach einem der Ansprüche 1 bis 4, **dadurch gekennzeichnet, dass** der zumindest eine Riegel (R1) und/oder der zumindest eine zweite Riegel (R2) der Riegelanordnung zumindest ein Betätigungsgriffstück (7) aufweist, welches je einer im Klappdeckel (2) vorhandenen Führungsausnehmung (8) zugeordnet ist.

6. Elektrisches/elektronisches Installationsgerät nach einem der Ansprüche 1 bis 5, **dadurch gekennzeichnet, dass** der zumindest eine erste Riegel (R1) und/oder der zumindest eine zweite Riegel (R2) der Riegelanordnung zumindest einen mit dem zugeordneten Riegelzapfen (3) des Gehäuses zusammenwirkenden Riegelhaken (5) aufweist.

7. Elektrisches/elektronisches Installationsgerät nach einem der Ansprüche 1 bis 6, **dadurch gekennzeichnet, dass** die Riegelanordnung drei verschieblich am Klappdeckel (2) gelagerte, miteinander zusammenwirkende, erste Riegel (R1) und zweite Riegel (R2) aufweist.

8. Elektrisches/elektronisches Installationsgerät nach einem der Ansprüche 1 bis 7, **dadurch gekennzeichnet, dass** der Klappdeckel (2) beim Verbringen, ausgehend von seiner ersten Position in seine zweite Position mit einer entgegen dieser Öffnungsbewegung wirkenden Federkraft beaufschlagt ist.

9. Elektrisches/elektronisches Installationsgerät nach einem der Ansprüche 1 bis 8, **dadurch gekennzeichnet, dass** dieses als einen Steckdoseneinsatz (E) aufweisende Schutzkontaktsteckdose ausgeführt ist.

10. Elektrisches/elektronisches Installationsgerät nach einem der Ansprüche 1 bis 8, **dadurch gekennzeichnet, dass** dieses als Schaltgerät ausgeführt ist.

11. Elektrisches/elektronisches Installationsgerät nach einem der Ansprüche 1 bis 8, **dadurch gekennzeichnet, dass** dieses als Anzeigegerät ausgeführt ist.

12. Elektrisches/elektronisches Installationsgerät nach einem der Ansprüche 1 bis 11, **dadurch gekennzeichnet, dass** das zur Lagerung des Klappdeckels (2) dienende Gehäuse als Zentralstück (1) ausgeführt ist.
